# FASCICULE DE BREVET EUROPEEN

(11) **EP 2 055 980 B1**
(45) Date de publication et mention de la délivrance du brevet: **22.08.2012**
(21) Numéro de dépôt: 08167586.0
(22) Date de dépôt: 27.10.2008
(51) Int. Cl.: F16D 49/02, H01H 3/26, H01H 3/60

(54) **Actionneur électromécanique muni d'un frein mécanique de type à ressort à spires enroulé**
Elektromechanisches Stellglied, das mit einer mechanischen Bremse vom Typ Federspeicherbremse mit eingerollten Windungen ausgestattet ist
Electromagnetic actuator equipped with a mechanical brake of the type with a wound-coil spring

(30) Priorité: 29.10.2007 FR 0758659
(43) Date de publication de la demande: 06.05.2009
(73) Titulaire: ALSTOM Technology Ltd, 5400 Baden (CH)
(72) Inventeur: Suter, Ernst, 5741, Kolliken (CH)
(74) Mandataire: Ilgart, Jean-Christophe

(56) Documents cités:
- EP-A- 0 455 039
- CH-A- 424 932
- DE-B1- 1 690 093
- DE-C- 896 742
- DE-U1- 8 800 180
- US-A- 3 405 791

## Description

### DOMAINE TECHNIQUE ET ART ANTÉRIEUR

L'invention concerne le domaine des actionneurs du type comprenant un moteur électrique et un engrenage pour transmettre le mouvement du moteur à un arbre d'entraînement entre deux positions déterminées.

Elle s'applique aux actionneurs d'interrupteurs, tels que les sectionneurs, et plus particulièrement aux sectionneurs de moyenne ou haute tension.

Dans les sectionneurs à haute ou moyenne tension, il est connu d'utiliser, en tant qu'actionneur, un moteur électrique, un engrenage pour transmettre le mouvement du moteur à un arbre d'entraînement entre deux positions déterminées correspondant aux deux positions d'ouverture et de fermeture du contact principal mobile de l'interrupteur et enfin au moins un premier interrupteur auxiliaire pour couper l'alimentation du moteur une fois que le contact principal a atteint sa position de fermeture ou d'ouverture.

Il est connu également de synchroniser le basculement du contact mobile du premier interrupteur auxiliaire avec la position de fermeture du contact principal mobile de sectionneur.

Il est enfin connu de synchroniser le basculement du contact mobile du premier interrupteur auxiliaire avec le basculement d'un contact mobile d'un deuxième interrupteur auxiliaire qui sert à signaler l'état de commutation (I/O) du sectionneur.

Ainsi, le document CH 424932 divulgue un actionneur d'interrupteur, comprenant un moteur électrique, une roué dentée 11 accouplée avec l'arbre de sortie du moteur et solidaire d'un système de vis sans fin 5,6 avec un écrou 6 formant curseur, qui met en rotation, par l'intermédiaire d'un levier à fourche 7, un arbre principal connecté à un contact de l'interrupteur, tel qu'un sectionneur. Le levier à fourche 7 est configuré de sorte à permettre une course libre à l'écrou 6 après la fin du mouvement de l'arbre principal. Sur cette course libre, l'alimentation du moteur est coupée et le moteur et l'écrou 6 du système de vis sans fin s'arrêtent. Un paquet de rondelle Belleville 20 formant ressort amortit le freinage de l'écrou 6. La vis sans fin 5 possède un dégagement qui permet le désengagement de l'écrou 6 à la fin de manoeuvre. Les rondelles Belleville 20 permettent le réengagement de l'écrou 6 dans la vis 5 lors de la rotation inverse. La butée de l'écrou ainsi réalisée engendre des forces importantes dans la broche filetée 5 du système de vis sans fin et dans le châssis 4. De plus, la zone de désengagement de l'écrou 6 et la vis sans fin sont soumises à une usure importante. Cela impose donc de redimensionner le mécanisme par rapport à sa fonction première requise, à savoir la mise en rotation de l'arbre principal. Ce document ne s'intéresse pas à la manière de commander des contacts d'interrupteurs auxiliaires sur une longue course.

Le document DE 1690093, divulgue un perfectionnement de l'actionneur selon le brevet CH 424 932, qui consiste à prévoir un interrupteur additionnel pour activer un frein électrique du moteur lors de la course libre (phase de fin de course du curseur 6). L'utilisation d'un tel frein électrique du moteur n'est pas une solution optimisée en termes de coût. Il est nécessaire de remédier aux contraintes générées par le courant de court-circuit important.

Le document EP 0455039 divulgue un actionneur d'interrupteur comprenant une broche rotative 1 qui déplace un écrou 2 formant curseur muni d'un axe 5 logé dans une fente 6 de forme adaptée pour mettre en rotation un arbre principal 4 solidaire d'un contact de l'interrupteur. Il est prévu un dispositif d'indication 12 comprenant une fente 13 et commandé par l'axe 5 en déplacement afin de pivoter. Le dispositif d'indication 12 peut être muni d'une section dentée 15 afin de mettre en rotation un pignon 16 et son arbre 17 avec lequel il est solidaire. La rotation de l'arbre 17 actionne l'interrupteur auxiliaire pour couper l'alimentation du moteur (non représenté) qui met en rotation la broche 1. La course de pivotement du dispositif d'indication 12 n'est pas suffisamment longue. L'utilisation d'un tel pignon 17 et du balancier 3 n'est pas une solution optimisée en termes de coût. En outre, ce document ne propose pas de solution pour freiner le mouvement en fin de course.

Selon ce document, il y a donc un risque que le mouvement soit arrêté par blocage de l'axe 14 en fin de fente 13, ce qui peut générer des forces importantes. En d'autres termes, une telle fente 13 conçue avec des portions 13a, 13b courtes pour les phases de démarrage et d'arrêt est susceptible d'engendrer des problèmes pour les actionneurs d'interrupteur à faible frottement et/ou grande inertie.

Le brevet US 3 405 791 divulgue un frein mécanique constitué d'un ressort enroulé 30, 30a, 30c, 30d à spires autour d'un arbre 26, 26a, 26c, 26d. Les montages des différents ressorts 30, 30c, 30d prévus dans ce brevet sont complexes et ne permettent pas d'obtenir un frein non autobloquant dans les deux sens de rotation de l'arbre 26, 26a, 26c, 26d autour desquels ils ont enroulés individuellement.

Le but de l'invention est de proposer un nouveau type d'actionneur électromécanique, en particulier pour les sectionneurs haute ou moyenne tension, qui pallie aux inconvénients des actionneurs existants, en particulier par un freinage efficace de mouvement en fin de course et qui permet un freinage non autobloquant dans les deux sens de rotation d'arbre.

Un autre but de l'invention est de proposer un actionneur avec un frein dont la force de freinage est stable et indépendante des contraintes de l'environnement extérieur (poussières, pollution, graisse, froid, gel...), et qui ne nécessite pas de maintenance.

### EXPOSÉ DE L'INVENTION

A cet effet, il est prévu un actionneur de type électromécanique selon la revendication 1 comprenant :
- un bâti,
- un moteur électrique fixé au bâti,
- un engrenage pour transmettre le mouvement du moteur à un arbre d'entraînement entre deux positions déterminées, lesdits engrenage et arbre d'entraînement étant également fixés au bâti,
- un frein constitué d'un ressort à spires, de diamètre interne à l'état de repos inférieur au diamètre externe d'un arbre support solidaire de l'engrenage, et autour duquel il est enroulé, les deux extrémités libres du ressort étant agencées chacune dans une fente pratiquée dans le bâti transversalement à l'arbre support, l'agencement étant tel que seule une extrémité vient en appui transversal contre sa fente alors que l'autre est libre transversalement dans sa fente, ce qui génère une force de freinage limitée à la force d'ouverture du ressort.

Ainsi, selon l'invention, les deux extrémités du ressort à spires sont chacune logées dans une fente du bâti et les deux fentes sont agencées l'une par rapport à l'autre de telle manière que l'une ou l'autre des extrémités du ressort entre en butée transversale avec sa fente correspondante, ce qui provoque l'équilibre entre les forces d'ouverture des spires du ressort et de la force de freinage.

Par rapport aux actionneurs de sectionneur haute tension de l'art antérieur, l'actionneur selon l'invention propose donc un frein mécanique efficace en fin de course et ce quelle soit l'inertie et/ou les frottements intrinsèques à l'actionneur.

Selon l'invention, le frein est commandé en fonction de la position de l'arbre d'entraînement de manière à être :
- actionné après que l'arbre d'entraînement ait atteint l'une des positions déterminées et que l'alimentation du moteur ait été coupée ;
- relâché lorsque l'arbre d'entraînement est dans une position entre les deux positions déterminées.

Avantageusement, l'actionnement du frein mécanique est réalisé par le déplacement transversal selon un sens d'une partie elle-même déplacée par l'engrenage qui met en appui transversal une extrémité contre sa fente tout en laissant l'autre extrémité libre transversalement dans sa fente.

Selon un mode de réalisation préféré de l'invention, le frein mécanique est désactivé entre les deux positions déterminées de l'arbre d'entraînement, la désactivation du frein étant réalisée par le déplacement transversal de la partie solidaire de l'engrenage selon un sens opposé à celui précédent qui pousse au moins l'extrémité libre transversalement pour la mettre également en appui transversal contre sa fente en ouvrant complètement les spires du ressort autour de l'arbre support.

Ainsi, le frein mécanique selon l'invention est en quelque sorte auto-actionné et auto-relâché puisqu'il est actionné ou relâché uniquement par le mouvement de l'engrenage, c'est-à-dire sans intervention extérieure à l'actionneur.

### BRÈVE DESCRIPTION DES DESSINS

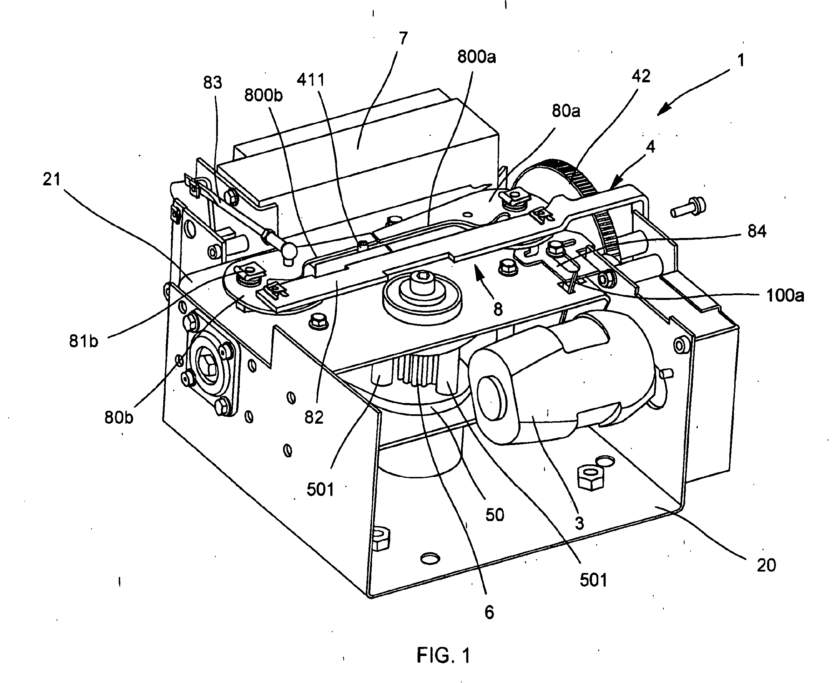

La figure 1 est une vue en perspective d'un actionneur 1 selon l'invention.
La figure 2 est une vue en perspective de l'actionneur 1 selon la figure 1 sur laquelle ne sont pas montrés les interrupteurs auxiliaires, une partie du bâti et des moyens de transmission.
Les figures 3A à 3E montrent, en vue partielle, les différentes étapes consécutives de fonctionnement de l'actionneur 1 selon la figure 1.
La figure 4 est une vue partielle d'un actionneur 1 selon la figure 1 montrant l'implantation d'un frein mécanique conforme à l'invention.
La figure 5 est une vue schématique d'un frein mécanique conforme à l'invention.

### EXPOSÉ DÉTAILLÉ DE MODES DE RÉALISATION PARTICULIERS

L'actionneur représenté 1 est un actionneur de sectionneur de terre haute tension.

L'actionneur 1 comprend tout d'abord un bâti 2 comportant au moins une embase 20 et un support principal 21 réalisés avantageusement en tôles de métal pliées. Un moteur électrique 3 ainsi qu'un engrenage 4 parallèles entre eux sont fixés à l'embase 20. Un arbre d'entraînement 6 orthogonal au moteur électrique 3 est monté en rotation dans le support principal 21 et embase 20.

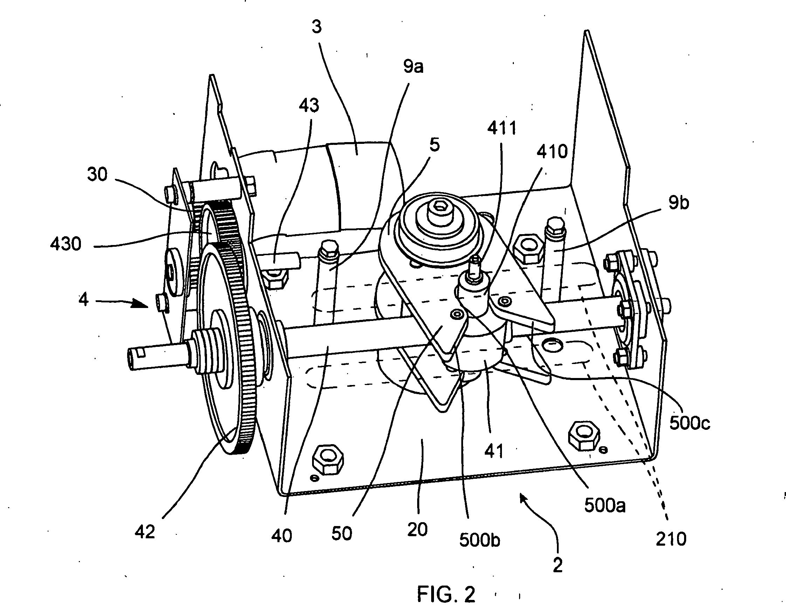

L'engrenage 4 comprend un moteur 3 avec un arbre de sortie 30, des roues dentées intermédiaires, et une roue dentée 42. La roue dentée 42 est solidaire d'une broche 40 en prise filetée avec un écrou 41 muni d'un pion de guidage et d'entraînement 410 et d'un axe formant curseur 411 (figure 2).

Un levier 5 à fourche 50 est solidaire d'un arbre d'entraînement 6. Cet arbre s'étend orthogonalement à la broche 40. Le levier 5 est positionné pour loger le pion de guidage 410 dans la fourche 50 entre deux positions déterminées sur la broche 40 pour mettre en rotation l'arbre d'entraînement 6 entre deux positions déterminées. Autrement dit, le levier 5 à fourche 50 est mis en rotation par le pion de guidage 410 ou, en coopération avec les cylindres 9a, 9b, bloqué dans l'une des deux positions déterminées. Le levier 5 à fourche 50 est solidaire d'un arbre d'entraînement 6 auquel est relié le contact principal mobile du sectionneur de terre (non représenté).

Dans un mode de réalisation avantageux, la roue dentée 42 est équipée d'un dispositif limiteur de couple (non représenté) qui limite le couple transmis du moteur 3 à l'arbre d'entraînement 6. On s'assure ainsi que la position du levier 5 à fourche 50 et du curseur 411, connecté aux moyens de commande, d'indication et signalisation, correspond toujours à celle du contact principal du sectionneur, même en cas de blocage.

Dans un mode de réalisation avantageux de l'invention, l'arbre 43, solidaire de la roue dentée 430 est équipé d'un frein mécanique 11 constitué d'un ressort enroulé à spires 110 comme détaillé par la suite.

Selon l'invention, l'actionneur 1 comprend en outre un premier interrupteur auxiliaire 7 pour couper l'alimentation du moteur électrique en fin de course du curseur 411. A cet effet, des moyens de transmission 8 pour transmettre le mouvement du curseur 411 en fin de course au premier interrupteur auxiliaire 7 sont prévus. Les moyens de transmission 8 comprennent un ensemble de deux leviers de commande 80a, 80b reliés entre eux et dont l'un 80b est relié à un contact mobile du premier interrupteur auxiliaire 7. Chacun des leviers de commande 80a, 80b est pivotant autour d'un axe 81a, 81b orthogonal à la broche 40 et est muni d'une piste 800a, 801a, 802a et 800b ,801b et 802b adaptée pour recevoir par coulissement le curseur 411 quelle que soit sa position sur la broche 40.

Chaque piste comporte une première partie rectiligne 800a, 800b, une partie incurvée 801a, 801b en continuité avec sa partie rectiligne 800a, 800b de sorte que, lorsque le curseur 411 est entre ses deux positions, il coulisse successivement dans les parties rectilignes 800b, 800a en regard l'une de l'autre et alignés dans l'axe de la broche 40 puis dans une des parties incurvée 801a, 801b de l'une des pistes.

Le coulissement du curseur 411 dans la partie incurvée 801a ou 801b provoque le pivotement du levier de commande 80a ou 80b qui en est muni et simultanément le pivotement de l'autre pièce 80b ou 80a par une première biellette 82, et le déplacement du contact mobile de l'interrupteur auxiliaire 7 par une deuxième biellette 83.

Selon une variante avantageuse, deux cylindres 9a, 9b s'étendent parallèlement à l'arbre d'entraînement 6 et sont positionnés à une distance telle qu'ils forment chacun une butée du levier 5 à fourche 50 dans l'une des deux positions déterminées de l'arbre d'entraînement 6.

Avantageusement, les deux leviers de commande 80a, 80b sont identiques.

Selon le mode de réalisation illustré, l'actionneur 1 comprend un deuxième interrupteur auxiliaire 10, dont un contact mobile est relié au contact mobile du premier interrupteur auxiliaire 7 par une troisième biellette 100 de sorte que le déplacement de l'interrupteur auxiliaire 7 provoque simultanément le déplacement de l'autre interrupteur auxiliaire 10.

La position du curseur 411 est détectée par les deux leviers de commande 80a, 80b agencés en parallèle au dessus de la broche 40. Chaque levier de commande 80a, 80b est adapté pour pivoter autour d'un axe 81a, 81b orthogonal à la broche 40 et agencé de part et d'autre de l'actionneur 1. La première biellette 82 qui relie les deux leviers 80a, 80b entre eux permet de les faire pivoter simultanément dans la même direction.

Le curseur 411 engagé dans les pistes 800a, 801a, 802a, 800b, 801b et 802b (guidage forcé) fait ainsi pivoter les leviers 80a, 80b en fonction de sa position sur la broche 40.

Tel qu'illustré, le levier 5 à fourche 50 est avantageusement réalisé à partir de deux plaques métalliques identiques 500 parallèles entre elles et fixées l'une à l'autre par plusieurs goupilles 501 et fixées rigidement à l'arbre d'entraînement 6. La distance entre les deux plaques métalliques 500 est légèrement supérieure à la hauteur de l'écrou 41. Chaque plaque 500 comprend une fente droite 500a et en continuité des bords inclinés 500b et 500c. La largeur de la fente 500a est légèrement supérieure au diamètre du pion de guidage 410.

Le mouvement de rotation de la broche 40 est transformé en mouvement de translation de l'écrou 41 et des pions de guidage 410, ces derniers étant guidés par les rainures 210 (parallèles à la broche 40) pratiquées dans l'embase 20 et le support 21. La fente 500a transforme le mouvement de translation de l'écrou 41 par l'intermédiaire du pion 410 en un mouvement de rotation de l'arbre d'entraînement 6. Les bords inclinés 500b, 500c interrompent la transmission du mouvement si l'une des positions prédéterminées est atteinte et, en coopération avec les cylindre 9a et 9b, bloquent l'arbre d'entraînement 6 dans cette position.

En fonction de la phase de fonctionnement de l'actionneur 1, le levier 5 est mis en rotation par les pions de guidage 410 ou bloqué par l'une des butées 9a, 9b à l'une de ses extrémités et par les pions de guidage 410 en interaction avec les bords inclinés 500b, 500c à l'autre de ses extrémités. L'angle de rotation du levier 5 à fourche 50 dépend de la longueur et de la position radiale des fentes droites 500a par rapport à la broche 40. Dans l'exemple de réalisation illustré, l'angle est de 90°.

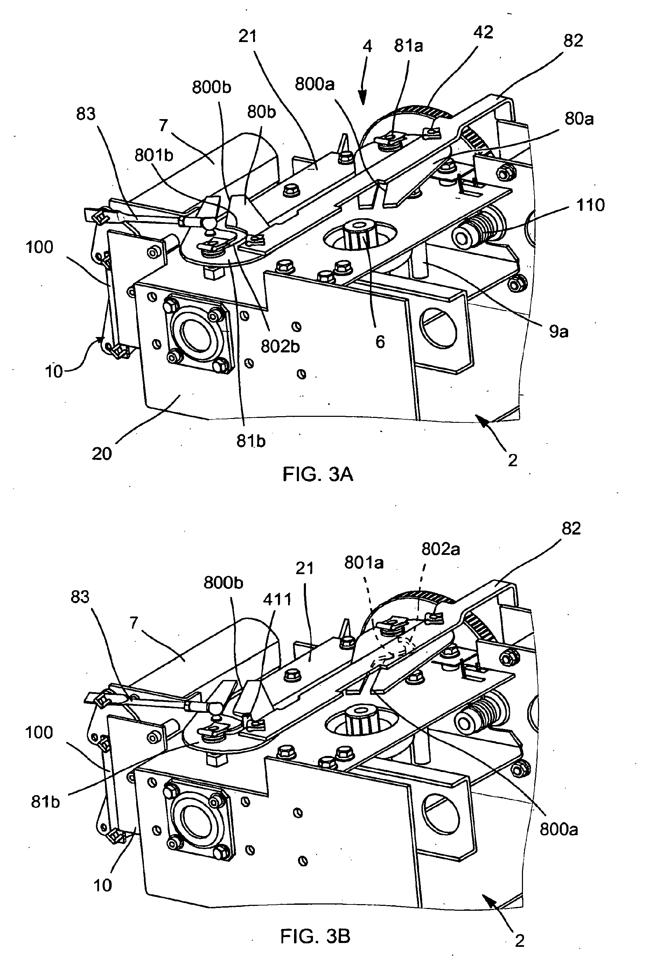

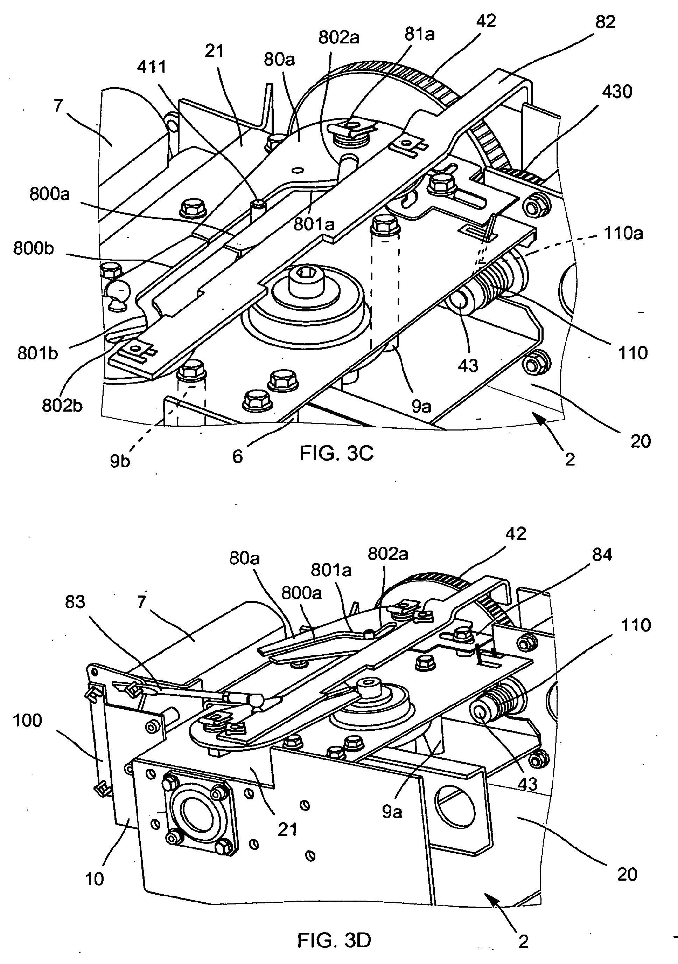

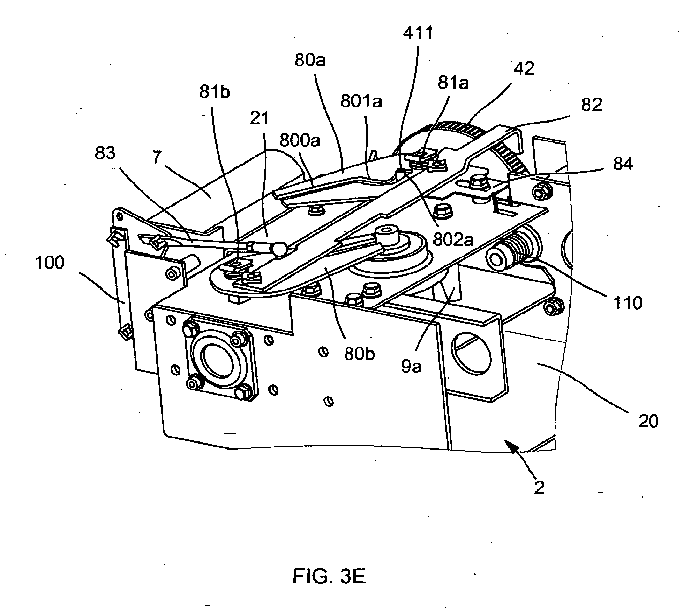

Les phases de fonctionnement de l'actionneur 1 et du sectionneur associé peuvent être distinguées comme suit :
1) Fin de position d'ouverture "O" (illustrée par la figure 3A),
2) Phase de début de course avec le moteur 3 en rotation et l'arbre d'entraînement 6 à l'arrêt dans la position d'ouverture "0" (illustrée par la figure 3B),
3) Phases de déplacement avec rotation de l'arbre d'entraînement 6 et déplacement associé du(es) contact(s) principal(aux) mobile(s) de haute tension HT (illustrée par la figure 3C),
4) Phase de fin de course avec le moteur 3 en rotation et l'arbre d'entraînement 6 à l'arrêt dans la position de fermeture "I" (illustrée par la figure 3D),
5) Fin de position de fermeture "I". (illustrée par la figure 3E).

Les phases de fonctionnement ci-dessus peuvent être établies dans les deux directions de « O » à « I » et de « I » à « O ».
Phase 1) : Le levier 5 à fourche 50 est bloqué par la butée 9b et par les pions de guidage 410. Les leviers de commande 80a, 80b et l'interrupteur auxiliaire 7 sont en position « O ». Le moteur électrique 3 n'est pas alimenté. Le levier 5 est bloqué par la butée 9b et par les pions de guidage 410 en contact avec les bords inclinés 500c.
Phase 2) : Le moteur électrique 3 est mis en tension et déplace alors l'écrou 41 sur la broche 40 vers la position "I". Le levier 5 est bloqué par la butée 9b et le pion de guidage 410 qui se déplace le long des bords inclinés 500c. L'arbre d'entraînement 6 est immobile et le contact haute tension solidaire de l'arbre 6 reste en position ouverte. L'écrou 41 fait pivoter le levier de commande 80b en direction d'une position intermédiaire. Le levier de commande 80a pivote alors simultanément dans la même direction grâce à la liaison directe réalisée avec la première biellette 82. Au cours de cette phase 2), le curseur 411 se déplace dans la partie rectiligne 802b, et puis dans la partie incurvée 801b, les leviers de commande 80a, 80b tournent dans le sens horaire. L'interrupteur auxiliaire 7 est actionné vers sa position intermédiaire. Le frein mécanique 11 est alors relâché, comme il sera décrit ci-après.
Phase 3) : Le curseur 411 a atteint la partie droite 800b et les pions de guidage 410 ont atteint dans le même temps les fentes droites 500a du levier 5. Les pions de guidage 410 glissent dans la fente droite 500a du levier 5 à fourche. Ce dernier est alors tourné, ce qui tourne également l'arbre d'entraînement 6. Le contact principal mobile de haute tension HT est alors déplacé vers la position de fermeture. Les leviers de commande 80a, 80b restent en position intermédiaire, c'est à dire avec les pistes 800a, 800b en regard l'une de l'autre et alignés au dessus de la broche 40, et le curseur 411 passe de la piste 800b de l'un des leviers 80b à la piste 800a de l'autre des leviers 80a. L'interrupteur auxiliaire 7 reste dans sa position intermédiaire.
Phase 4) : Le levier 5 à fourche 50 est bloqué par la butée 9b et les pions de guidage 410 qui glissent contre les bords inclinés 500b. Le contact principal HT entraîné par l'arbre d'entraînement 6 a atteint sa position de fermeture. Dans le même temps, le curseur 411 entre dans la partie incurvée 801a de la piste 800a et le levier 80a se déplace vers la position "I". Le levier 80b tourne dans le même sens par la liaison réalisée avec la première biellette 82. Les contacts mobiles du premier des interrupteurs auxiliaires 7, sont alors déplacé par la deuxième biellette 83 et arrivent dans la position "I" L'alimentation du moteur 3 est alors coupée et le frein mécanique 11 est actionné comme décrit ci-après pour freiner et stopper la rotation de l'arbre 43, et donc celle de l'engrenage 4 et du moteur 30. Le curseur 411 est arrêté dans la piste 802a.
Phase 5) : Le moteur 3 et l'engrenage 4 sont arrêtés complètement. La position finale est atteinte. Le levier 5 à fourche 50 est bloqué par la butée 9a et par les pions de guidage 410 qui s'engagent aux bords inclinés 500b. Dans cette phase 5), le curseur 411 est engagé dans la partie 802a rectiligne de la piste 800 à proximité de l'axe de pivot 81a. Pendant l'engagement du curseur 411 dans la partie incurvée 802a, le frein mécanique 11 est actionné, l'interrupteur auxiliaire 7 est en position « I ».

Le guidage du curseur 411 par au moins un des deux leviers de commande 80a, 80b est maintenu pendant toutes les phases de fonctionnement 1/2/3/4/5/. De plus, du fait de la liaison entre les deux leviers 80a, 80b par la biellette 82, la position des deux leviers 80a, 80b est toujours commandée par la position de l'écrou 41 qui commande la position des contacts mobiles HT.

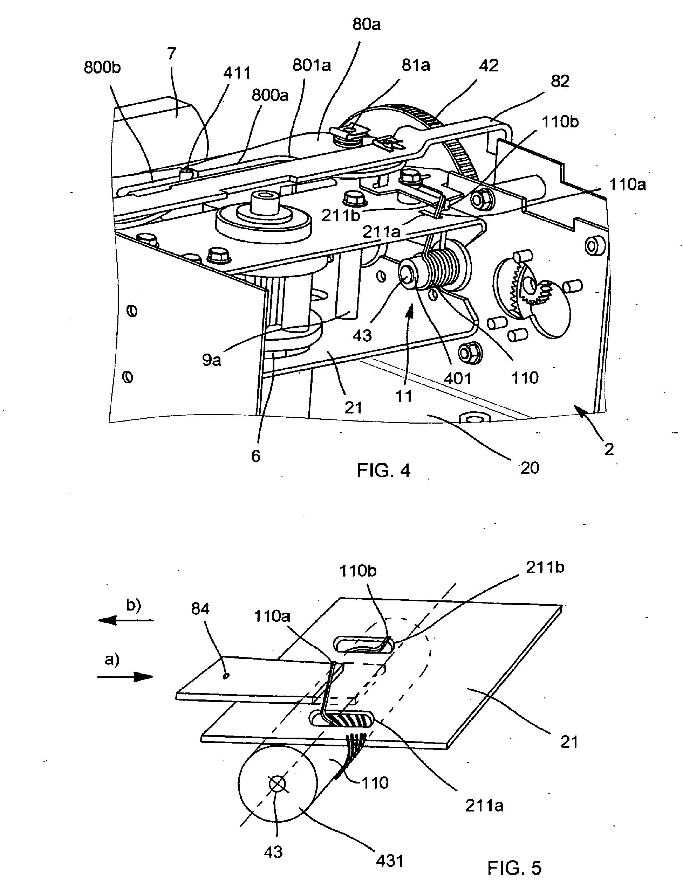

Comme mentionné ci-dessus, l'actionneur illustré comprend un frein mécanique 11 constitué d'un ressort enroulé à spires 110. Ce ressort 110 agit sur l'arbre 43 autour duquel il est monté. L'arbre 43 est un composant de l'engrenage 4 engrenant par son pignon 430 directement avec la roue dentée 42. Le couple de freinage généré par le frein 11 est inférieur au couple moteur donné par le moteur électrique 3. Typiquement, le couple de freinage correspond à une valeur de l'ordre de 10% du couple moteur. Le frein 11 est en position de freinage tant qu'aucune force extérieure n'est appliquée sur l'une des extrémités 110a du ressort 110. Le diamètre interne des spires 110 à l'état de repos du ressort est légèrement inférieur au diamètre externe de l'arbre 43 ou à celui d'une bague intermédiaire 431 emmanchée sur l'arbre 43 (figure 4). Typiquement, le diamètre interne des spires 110 est inférieur de 1 à 5 % à celui du diamètre externe de l'arbre 43 ou à celui de la bague 431 emmanchée dessus. L'arbre support 43 peut être ainsi soit réalisé par un arbre monobloc en une seule pièce soit par un ensemble d'un arbre 43 sur lequel est emmanché une bague 431 ou plusieurs pièces.

Dans le mode de réalisation illustré, les extrémités 110a, 110b sont guidées chacune dans une fente 211a, 211b pratiquée dans le support principal 21.

Le support principal 21 réagit à la force de freinage d'une manière telle que les spires s'ouvrent et se desserrent. Ainsi, la force de freinage est déterminée par la force d'ouverture du ressort enroulé 110. Le coefficient de frottement entre le ressort 110 et l'arbre 43 ou entre le ressort 110 et la bague 431 ne nuit pas à la force de freinage. Cela a pour avantage que la force de freinage reste stable, non influencée par les conditions extérieures telles que la poussière, la glace, la rosée, la pollution... Le choix du matériau de l'arbre 43 ou de la bague 431 peut être avantageusement déterminé pour obtenir un faible frottement. Le montage du ressort autour de la bague intermédiaire 431 et de ses extrémités 110a, 110b dans les fentes 211a, 211b du support 21 permet d'obtenir un frein non autobloquant dans les deux sens de rotation de l'arbre 43.

Selon un mode de réalisation, le frein n'est pas actionné par les moyens de commande de l'actionneur 1. Le frein 11 agit alors de manière constante sur l'arbre 43. Ce mode a pour avantage de réduire la durée d'arrêt du moteur et de l'engrenage efficacement avec un équipement simple de faible coût.

Selon un autre mode de réalisation, le frein est actionné par les moyens de commande de l'actionneur 1. Il est ainsi actionné ou relâché en fonction de la phase de fonctionnement de l'actionneur 1. Ce mode a pour avantage de nécessiter moins d'énergie et de générer moins d'usure du frein par abrasion. Ainsi selon cet autre mode, pour actionner le frein 11, il est prévu un coulisseau 84 entraîné en translation par le levier de commande 80a. Ainsi, dans la phase 4 lorsque le curseur 411 atteint la fin de course dans la partie incurvée 801a de la piste, le levier 80a en rotation déplace la pièce formant coulisseau 84 dans le sens b/. Une des extrémités libres 110a, 110b du ressort 110 s'appuie sur l'une des fentes 211a ou 211b. L'extrémité libre concernée par la mise en appui dépend du sens de rotation du moteur. En conséquence, le ressort 110 est ouvert à une de ses extrémités et la force de freinage est limitée à la force d'ouverture du ressort 110.

Pour désactiver le frein 11 dans la phase 2, lorsque le curseur 411 se déplace dans la piste 801a en direction de la piste 800a, le coulisseau 84 est déplacé dans le sens a/ contraire au sens b/ et appuie sur l'extrémité libre 110a du ressort 110 et la déplace ainsi dans la fente 211a pratiquée dans le support dans laquelle elle est logée. L'autre extrémité libre 110b est bloquée dans une autre fente 211b également pratiquée dans le support 21 et parallèle à la fente 211a. Le diamètre des spires du ressort 110 s'élargit alors et le frein mécanique 11 est désactivé. Le déplacement du coulisseau 84 en translation est commandé par celui en rotation du levier de commande 80a (figure 5)

La liaison entre les deux leviers 80a et 80b par la biellette 82 et la liaison entre le coulisseau 84 et le levier 80a sont tels que :
- le coulisseau 84 est déplacé dans le sens b/ et le frein est activé si le curseur 411 s'approche d'une des deux positions finales et se trouve dans les pistes incurvées 801a, 801b, c'est-à-dire au-delà des deux positions déterminées de l'arbre d'entrainement 6,
- le coulisseau 84 est déplacé dans le sens a/ contraire au sens b/ et le frein est désactivé si le curseur 411 se trouve dans l'une des pistes rectilignes 800a ou 800b, c'est-à-dire entre les deux positions déterminées de l'arbre d'entrainement 6.

L'actionneur 1 selon le mode de réalisation illustré comprend un deuxième interrupteur auxiliaire 10. Le contact mobile du deuxième interrupteur auxiliaire 10 est relié au contact mobile du premier interrupteur auxiliaire 7 par l'intermédiaire d'une troisième biellette 100. Ainsi, le déplacement du contact mobile de l'interrupteur 7 provoque simultanément le déplacement de celui de l'interrupteur auxiliaire 10.

Plus exactement, lorsque l'appareil qui est muni de l'actionneur 1 selon l'invention est un sectionneur haute ou moyenne tension, l'interrupteur auxiliaire 10 indique l'état de commutation O du sectionneur jusqu'à ce que le curseur 411 atteigne la partie incurvée 801b du levier pivotant 80b (figures 3A à 3B). Juste avant que le curseur 411 atteigne la partie rectiligne 800b, le contact mobile de l'interrupteur auxiliaire bascule dans l'état de commutation "intermédiaire" et reste dans cette position pendant le basculement du curseur 411 dans les parties rectiligne 800b et 800a (figure 3C). Lorsque le curseur 411 atteint la zone incurvée 801a le contact mobile de l'interrupteur auxiliaire 10 bascule simultanément avec celui de l'interrupteur auxiliaire 7 et indique donc l'état de commutation I du sectionneur (figures 3D).

La deuxième partie rectiligne 802a, 802b des pistes est en continuité avec la partie incurvée 801a, 801b. La longueur de cette deuxième partie rectiligne 802a, 802b permet au curseur (411) coulissant à l'intérieur de s'arrêter sans pivotement des leviers 80a, 80b, une fois que l'alimentation du moteur électrique a été coupée par l'interrupteur auxiliaire 7 en position de commutation (figure 3E).

L'actionneur qui vient d'être décrit s'applique particulièrement à la commande des sectionneurs haute ou moyenne tension : l'arbre d'entraînement 6 en rotation peut entraîner un ou des contact(s) principal (aux) mobiles HT ou MT.

## Revendications

1. Actionneur (1) de type électromécanique comprenant :
- un bâti (2),
- un moteur électrique (3) fixé au bâti (2),
- un engrenage (4) pour transmettre le mouvement du moteur à un arbre d'entraînement (6) entre deux positions déterminées, lesdits engrenage (4) et arbre d'entraînement (6) étant également fixés au bâti (2),
- un frein (11)
**caractérisé en ce que** le frein est constitué d'un ressort à spires (110), de diamètre interne à l'état de repos inférieur au diamètre externe d'un arbre support (43) solidaire de l'engrenage (4), et autour duquel il est enroulé, les deux extrémités libres (110a, 110b) du ressort (110) étant agencées chacune dans une fente (211a, 211b) pratiquée dans le bâti (2) transversalement à l'arbre support (43), l'agencement étant tel que seule une extrémité (110b) vient en appui transversal contre sa fente (211b) alors que l'autre (110a) est libre transversalement dans sa fente (211a), ce qui génère une force de freinage limitée à la force d'ouverture du ressort (110),
le frein étant commandé en fonction de la position de l'arbre d'entraînement (6) de manière à être :
- actionné après que l'arbre d'entraînement (6) ait atteint l'une des positions déterminées et que l'alimentation du moteur ait été coupée,
- relâché lorsque l'arbre d'entraînement est dans une position entre les deux positions déterminées.

2. Actionneur selon la revendication 1, dans lequel l'actionnement du frein mécanique est réalisé par le déplacement transversal selon un sens b d'une partie (84) elle-même déplacée par l'engrenage (4) qui met en appui transversal l'extrémité (110b) contre sa fente (211b) tout en laissant l'autre extrémité (110a) libre transversalement dans sa fente (210a).

3. Actionneur selon la revendication 1 ou 2, dans lequel le frein mécanique (11) est désactivé entre les deux positions déterminées de l'arbre d'entraînement (6), la désactivation du frein étant réalisée par le déplacement transversal de la partie (84) selon un sens a/ opposé au sens b/ qui pousse au moins l'extrémité (110a) libre transversalement pour la mettre également en appui transversal contre sa fente (211a) en ouvrant complètement les spires du ressort (110) autour de l'arbre support (43).

## Claims

1. An actuator (1) of an electro-mechanical type comprising:
- ·a frame (2);
- · an electric motor (3) fixed to the said frame (2) ;
- · a gear drive (4) for transmitting motion from the motor to a drive shaft (6) between two predetermined positions, the said gear drive (4) and drive shaft (6) also being fixed to the frame (2); and
- · a brake (11)
**characterised in that**
this brake consists of a coil spring (110), having, when relaxed, an inside diameter that is smaller than the outside diameter of a support shaft (43) that is fixed relative to the gear drive (4), and around which the spring is coiled, each of the two free ends (110a, 110b) of the spring (110) being arranged in a respective slot (211a, 211b) formed in the said frame (2) transversely to the support shaft (43), the arrangement being such that only one end (110b) comes into transverse engagement against its slot (211b), while the other end (110a) is free in its slot (211a) in the transverse direction, whereby to generate a braking force limited to the opening force of the spring (110),
wherein the brake is controller as a function of the position of the drive shaft (6) in such a way as to be:
-. activated after the drive shaft (6) has reached one of the said predetermined positions, and after the power supply to the motor has been broken; and
-. released when the drive shaft is in a position between the two said predetermined position.

2. An actuator according to claim 1, wherein the mechanical brake is actuate by transverse displacement in one direction (b) of a member (84) which is itself displaced by the gear drive (4) so as two put the said one end (110b) into transverse engagement against its slot (211b) while leaving the other end (110a) free in its slot (210a) in the transverse direction.

3. An actuator according to claim 1 or 2, wherein the mechanical brake is disabled between the two said predetermined positions of the drive shaft (6), the brake being disabled by transverse displacement of the said member (84) in a direction (a) opposite to the said one direction (b), so as to exert a thrust transversely on at least the free end (110a), whereby to put it too into transverse engagement against its slot (211a) by fully opening the turns of the spring (110) around the support shaft (43).

## Patentansprüche

1. Stellglied (1) vom elektromechanischen Typ, umfassend:
- einen Rahmen (2),
- einen am Rahmen (2) befestigten Elektromotor (3),
- ein Getriebe (4) zur Übertragung der Bewegung des Motors auf eine Antriebswelle (6) zwischen zwei bestimmten Positionen, wobei das Getriebe (4) und die Antriebswelle (6) ebenfalls am Rahmen (2) befestigt sind,
- eine Bremse (11), **dadurch gekennzeichnet, dass** die Bremse gebildet ist durch eine Feder mit Windungen (110) mit einem Innendurchmesser im Ruhezustand kleiner als der Außendurchmesser einer mit dem Getriebe (4) verbundenen Tragwelle (43), um welche herum sie aufgewickelt ist, wobei die zwei freien Enden (110a, 110b) der Feder (110) jeweils in einem Schlitz (211a, 211b) angeordnet sind, der im Rahmen (2) quer zur Tragwelle (43) vorgesehen ist, wobei die Anordnung derart ist, dass nur ein Ende (110b) in Queranlage gegen seinen Schlitz (211 b) gelangt, wohingegen das andere (110a) in Querrichtung in seinem Schlitz (211a) frei ist, was eine Bremskraft erzeugt, die auf die Öffnungskraft der Feder (110) begrenzt ist,
und bei dem die Bremse als Funktion der Position der Antriebswelle (6) derart gesteuert wird, dass sie:
- betätigt ist, nachdem die Antriebswelle (6) eine der bestimmten Positionen erreicht hat und die Versorgung des Motors unterbrochen ist,
- gelöst ist, wenn die Antriebswelle in einer Position zwischen den zwei bestimmten Positionen ist.

2. Stellglied nach Anspruch 1, bei dem die Betätigung der mechanischen Bremse realisiert wird durch die Querverlagerung in einer Richtung b/ eines Teils (84), welches selbst wiederum durch das Getriebe (4) verlagert wird, was das Ende (110b) in Queranlage gegen seinen Schlitz (211b) bringt, wobei das andere Ende (110a) in Querrichtung in seinem Schlitz (210a) frei bleibt.

3. Stellglied nach Anspruch 1 oder 2, bei dem die mechanische Bremse (11) zwischen den zwei bestimmten Positionen der Antriebswelle (6) deaktiviert ist, wobei die Deaktivierung der Bremse realisiert wird durch die Querverlagerung des Teils (84) in einer Richtung a/ entgegengesetzt zur Richtung b/, was wenigstens das freie Ende (110a) in Querrichtung drückt, um es ebenfalls in Queranlage gegen seinen Schlitz (211a) zu bringen, wobei die Windungen der Feder (110) um die Tragwelle (43) herum vollstandig geöffnet werden.
